# EUROPÄISCHE PATENTSCHRIFT

(11) **EP 3 070 047 B1**
(45) Veröffentlichungstag und Bekanntmachung des Hinweises auf die Patenterteilung: **31.01.2018**
(21) Anmeldenummer: 16160848.4
(22) Anmeldetag: 17.03.2016
(51) Int. Cl.: B67C 3/10, B67C 7/00, B65B 31/00, B29C 49/08, B29C 49/12

(54) **VERFAHREN UND VORRICHTUNG ZUM BEREITSTELLEN EINES INERTGASES IN EINER GETRÄNKEABFÜLLANLAGE**
METHOD AND DEVICE FOR PROVIDING AN INERT GAS IN A BEVERAGE FILLING MACHINE
PROCEDE ET DISPOSITIF DE FOURNITURE D'UN GAZ INERTE DANS UNE INSTALLATION DE REMPLISSAGE DE BOISSONS

(30) Priorität: 17.03.2015 DE 102015103961
(43) Veröffentlichungstag der Anmeldung: 21.09.2016
(73) Patentinhaber: KRONES AG, 93073 Neutraubling (DE)
(72) Erfinder: Buchhauser, Dr., Ulrich, 93073 Neutraubling (DE)
(74) Vertreter: Nordmeyer, Philipp Werner

(56) Entgegenhaltungen:
- EP-A2- 2 546 047
- WO-A1-2011/045126
- DE-A1- 3 226 172
- DE-A1-102013 103 192

## Beschreibung

### Technisches Gebiet

Die vorliegende Erfindung betrifft ein Verfahren sowie eine Vorrichtung zum Bereitstellen eines Inertgases in einer Getränkeabfüllanlage, beispielsweise zum Bereitstellen von CO₂ zum Spülen beziehungsweise Vorspannen von zu befüllenden Behältern in einer Getränkeabfüllanlage.

### Stand der Technik

In Getränkeabfüllanlagen ist es bekannt, Inertgase zum Spülen und zum Vorspannen von zu befüllenden Behältern zu verwenden. Das Spülen eines zu befüllenden Behälters mit einem Inertgas dient beispielsweise dazu, den sich im Behälter nach der Herstellung beziehungsweise Bereitstellung des Behälters befindlichen Luftsauerstoff aus diesem herauszutreiben, um eine sauerstoffarme beziehungsweise sauerstofffreie Atmosphäre im zu befüllenden Behälter bereitzustellen. Durch das Bereitstellen der sauerstoffarmen beziehungsweise sauerstofffreien Atmosphäre in dem Behälter kann besonders beim Abfüllen von sauerstoffempfindlichen Produkten eine verbesserte Produktqualität im dann befüllten Behälter erreicht werden.

Weiterhin ist es bekannt, besonders beim Abfüllen von CO₂-haltigen Getränken, den zu befüllenden Behälter vor dem Einleiten des eigentlichen Füllprodukts mit einem Spanngas vorzuspannen, um während des Befüllvorganges ein übermäßiges Entbinden des CO₂ und damit eine übermäßige Aufschäumneigung des Füllprodukts zu vermeiden. Ein solches Verfahren wird auch als Gegendruckabfüllverfahren bezeichnet.

Weiterhin ist es bekannt, insbesondere bei sauerstoffempfindlichen Füllprodukten, den Kopfraum des befüllten Behälters, also den über dem jeweiligen Füllproduktspiegel bis zur Mündung des Behälters vorliegenden Raum mit einem Inertgas zu spülen, bevor der Behälter mit dem Behälterverschluss verschlossen wird. Auf diese Weise kann ebenfalls erreicht werden, dass nur ein geringer Anteil an Luftsauerstoff beziehungsweise Sauerstoff in dem dann verschlossenen Behälter verbleibt. Auch auf diese Weise kann die Produktqualität im Behälter aufrechterhalten bleiben und die Lagerfähigkeit des Füllprodukts verbessert sich.
Im Bereich von Getränkeabfüllanlagen wird als Inertgas insbesondere CO₂ verwendet, welches sowohl zum Spülen der Behälter, zum Spülen des Kopfraumes als auch zum Vorspannen der zu befüllenden Behälter verwendet wird. Das CO₂ wird dabei beispielsweise aus einer CO₂-Quelle, beispielsweise einem CO₂-Tank oder einem CO₂-Verdampfer zugeführt und dann in der Getränkeabfüllanlage verwendet. Hierbei werden große Mengen an CO₂ während des Abfüllbetriebes verwendet.
Sauerstoffempfindliche Produkte sind beispielsweise Fruchtsäfte, Fruchtschorlen oder Bier. Diese Produkte können bei Vorliegen von Sauerstoff oxidieren, so dass die Produktqualität leiden kann, wenn ein Sauerstoffanteil in dem zu befüllenden Behälter beziehungsweise in dem befüllten Behälter vorliegt.

Die DE 32 26 172 A1 beschreibt ein Verfahren und eine Vorrichtung, gemäß dem Oberbegriff des Anspruchs 5, zum Austausch von Luft innerhalb eines Behälterhalses, wobei vor dem Austausch ein Warmgas in den Kopfraum des mit einer Flüssigkeit gefüllten Behälters eingegeben wird. Die DE 10 2013 103192 A1 beschreibt ein Verfahren sowie Füllsystem zum Füllen von Behältern. Die EP 2 546 047 A2 beschreibt eine Vorrichtung und ein Verfahren zum Herstellen von Behältern. Die WO 2011/045126 A1 beschreibt eine Anlage und ein Verfahren zur Herstellung, Abfüllung, Verpackung und/oder zum Transport von Getränken.

### Darstellung der Erfindung

Ausgehend von dem bekannten Stand der Technik ist es eine Aufgabe der vorliegenden Erfindung, ein verbessertes Verfahren und eine verbesserte Vorrichtung zum Bereitstellen eines Inertgases anzugeben.
Diese Aufgabe wird mittels eines Verfahrens mit den Merkmalen des Anspruchs 1 gelöst. Vorteilhafte Weiterbildungen ergeben sich aus den Unteransprüchen.
Entsprechend wird ein Verfahren zum Bereitstellen eines Inertgases in einer Getränkeabfüllanlage vorgeschlagen, umfassend die Schritte des Zuführens von Prozessabwärme der Getränkeabfüllanlage zu einem Wärmetauscher, des Zuführens eines Inertgases von einer Inertgasquelle zu dem Wärmetauscher, des Erwärmens des Inertgases im Wärmetauscher, und des Bereitstellens des erwärmten Inertgases zur Verwendung in der Getränkeabfüllanlage. Ferner ist gemäß der Erfindung zwischen der Inertgasquelle und dem Wärmetauscher ein Druckminderer angeordnet.

Dadurch, dass Prozessabwärme der Getränkeabfüllanlage dem Wärmetauscher zugeführt wird und das Inertgas dann im Wärmetauscher erwärmt wird, kann auf der Grundlage der gleichen Menge an Inertgas ein höheres Volumen an Inertgas bereitgestellt werden, als dies im nicht erwärmten Zustand der Fall wäre. Damit kann erreicht werden, dass mit der gleichen bereitgestellten Menge an Inertgas ein höherer Volumenstrom an Inertgas in der Getränkeabfüllanlage erreicht werden kann, oder der gleiche Volumenstrom mit einer geringeren Menge an Inertgas bereitgestellt werden kann. Auf diese Weise lässt sich entweder eine weitere Verbesserung der Nutzung des Inertgases hervorrufen, oder aber es kann eine effizientere beziehungsweise ökonomischere Verwendung des Inertgases erreicht werden, da eine geringere Ausgangsmenge an Inertgas eingesetzt werden kann.

Durch die Verwendung von Prozessabwärme aus der Getränkeabfüllanlage kann weiterhin die erforderliche Wärmeenergie zur Erwärmung des Inertgases effizient und ökonomisch bereitgestellt werden.

Besonders bevorzugt wird das Inertgas in dem Wärmetauscher auf 20° bis 90°, bevorzugt auf 30° bis 60°, besonders bevorzugt auf 35° bis 45°, und ganz besonders bevorzugt auf 40°C erwärmt. In diesem Temperaturbereich kann ein guter Ausgleich geschaffen werden zwischen dem auf der einen Seite deutlich erhöhten Volumen einer vorgegebenen Menge an Inertgas und gleichzeitig einer geringen beziehungsweise nicht vorliegenden Beeinflussung oder Beeinträchtigung des Füllproduktes sowie des jeweiligen Behälters durch die zusätzlich aufgebrachte Wärmeenergie. In diesem Zusammenhang ist entsprechend darauf zu achten, dass die Temperatur des Inertgases in Kombination mit dem Volumenstrom des Inertgases so ausgebildet ist, dass eine unerwünschte Erwärmung des Füllprodukts vermieden wird.

Auch eine unerwünschte Erwärmung des zu befüllenden Behälters kann durch die Einstellung der richtigen Temperatur des Inertgases vermieden werden. Dies ist insbesondere beim Befüllen von Kunststoffbehältern von Bedeutung, da diese besonders beim Vorspannen nicht verformt werden sollen. Entsprechend muss beim Aufbringen des Vorspanndruckes mittels des Inertgases vermieden werden, dass der zu befüllende Behälter eine Temperatur überschreitet, ab welcher er verformbar wird.

Bevorzugt wird die Prozessabwärme aus anderen Bereichen der Getränkeabfüllanlage zugeführt, beispielsweise von einer Flaschenwaschmaschine, einer Streckblasmaschine, einem Ofen der Streckblasmaschine, einer Pasteurisierungsanlage, insbesondere einer Tunnelpasteurisierungsanlage, einem Behälterwärmer, von Antrieben der Getränkeabfüllanlage, einem Druckluftkompressor, beispielsweise der Streckblasmaschine, Abwärme aus der Produktbehandlung, beispielsweise einer Kurzzeiterhitzung oder Ultrahocherhitzung, Abwärme einer Reinigungsanlage, beispielsweise einer CIP-Anlage, sowie einem Blockheizkraftwerk zum Betrieb der Getränkeabfüllanlage.

Die jeweilige Abwärme kann dabei beispielsweise direkt über die in den einzelnen Anlagenkomponenten verwendeten, die Wärmeenergie tragenden Medien an den Wärmetauscher übergeben werden, oder an den Anlagenkomponenten ist jeweils ebenfalls ein Wärmetauscher vorgesehen, über welchen die Abwärme dann in Kombination mit einem Transportmedium an den Wärmetauscher zur Erwärmung des Inertgases geleitet wird.

Auf diese Weise kann ohnehin anfallende Prozessabwärme dazu verwendet werden, das Inertgas auf die gewünschte Temperatur in dem Wärmetauscher anzuheben. Es wird entsprechend keine zusätzliche Wärmeenergie notwendig, sondern es kann Abwärme verwendet werden.

Das unter einer erhöhten Temperatur bereitgestellte Inertgas kann beispielsweise als Blasfluid beim Streckblasen von zu befüllenden Behältern, zum Spülen zu befüllender Behälter vor dem Füllen, beispielsweise in einem Rinser oder einem Füller, zum Vorspannen der Behälter, zur Inertisierung des Kopfraumes während beziehungsweise nach dem Füllen bis hin zum Verschließen, zur Überlagerung in einem Produktkessel, zur Inertisierung des Behältertransportweges in einem Isolator und/oder Kopfraumisolator, zur Zerstörung im Kopfraum des Behälters vorliegenden Schaumes in einem bereits befüllten Behälter, zur Begasung eines Behälterdeckels, zum Abblasen der Behälter, beispielsweise zur Trocknung oder zur Ausschleusung, beispielsweise von Verschlüssen, verwendet werden. Viele andere Möglichkeiten der Verwendung des Inertgases, welches auf der erhöhten Temperatur bereitgestellt wird, sind in einer Getränkeabfüllanlage ebenfalls denkbar.

Die oben genannte Aufgabe wird weiterhin durch eine Vorrichtung mit den Merkmalen des Anspruchs 5 gelöst. Vorteilhafte Weiterbildungen ergeben sich aus den Unteransprüchen.

Entsprechend wird eine Vorrichtung zum Bereitstellen eines Inertgases in einer Getränkeabfüllanlage, umfassend eine Inertgasquelle und ein Bereitstellungsventil zum Bereitstellen des Inertgases zur Verwendung in der Getränkeabfüllanlage vorgeschlagen. Erfindungsgemäß ist zwischen der Inertgasquelle und dem Bereitstellungsventil ein Wärmetauscher zum Erwärmen des Inertgases vorgesehen. Ferner ist gemäß der Erfindung zwischen der Inertgasquelle und dem Wärmetauscher ein Druckminderer angeordnet.

Auf diese Weise ergeben sich die oben genannten vorteilhaften Wirkungen.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Darstellung einer Vorrichtung zum Bereitstellen eines Inertgases gemäß dem Stand der Technik und
- Figur 2: eine schematische Darstellung einer Vorrichtung zum Bereitstellen eines Inertgases gemäß einem Ausführungsbeispiel.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird verzichtet, um Redundanzen zu vermeiden.

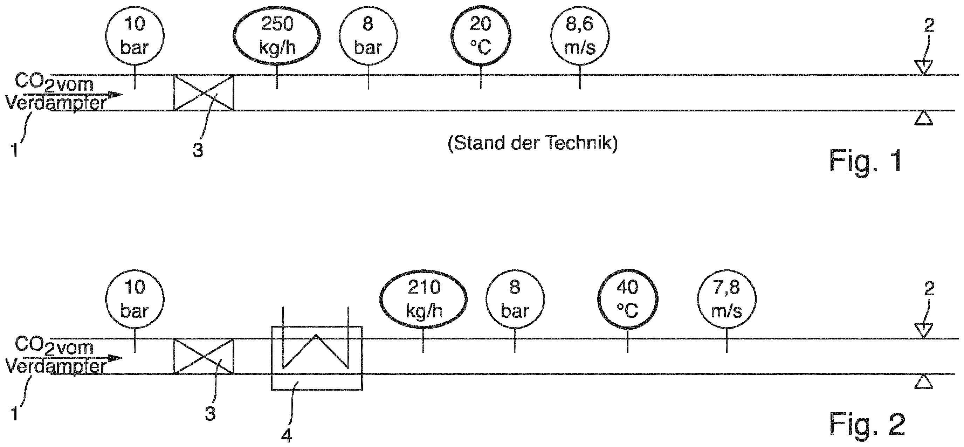

In Figur 1 ist eine Vorrichtung gemäß dem Stand der Technik gezeigt, in welcher ein Inertgas von einer Inertgasquelle 1 an einem Bereitstellungsventil 2 zur Verwendung in einer Getränkeabfüllanlage bereitgestellt wird. In dem Kanal von der Inertgasquelle 1 zum Bereitstellungsventil 2 ist ein Druckminderer 3 vorgesehen, mittels welchem ein bei einem konstanten Druck bereitgestellter Gasstrom des Inertgases am Bereitstellungsventil 2 erreicht werden kann.

Als Inertgasquelle 1 ist hier ein Verdampfer genannt, in welchem flüssiges Inertgas in die gasförmige Phase überführt wird und dann entsprechend als gasförmiges Inertgas bereitgestellt wird.

In dem gezeigten Beispiel gemäß dem Stand der Technik wird das Inertgas, beispielsweise CO₂, von der Inertgasquelle 1 beispielsweise bei einem Druck von 10 bar bereitgestellt und wird im Druckminderer 3 auf einen Druck von 8 bar herabgesetzt. Das Inertgas liegt dann an dem Bereitstellungsventil 2 beispielsweise unter einem Druck von 8 bar bei einer Temperatur von 20°C an, wobei hier eine Menge von beispielsweise 250 kg/h an CO₂ an das Bereitstellungsventil 2 geliefert werden kann.

In der Figur 2 ist ein Ausführungsbeispiel der vorliegenden Erfindung gezeigt, gemäß welchem ebenfalls eine Inertgasquelle 1 vorgesehen ist, mittels welcher das Inertgas an einem Druckminderer 3 bereitgestellt wird, beispielsweise ebenfalls unter einem Druck von 10 bar. Nach dem Druckminderer 3 ist jedoch zusätzlich ein Wärmetauscher 4 vorgesehen, mittels welchem das nach dem Druckminderer 3 vorliegende Inertgas erwärmt werden kann, beispielsweise auf 40°C. Das erwärmte Inertgas liegt dann ebenfalls bei einem Druck von 8 bar an dem Bereitstellungsventil 2 der Getränkeabfüllanlage an.

Durch die Erwärmung des Inertgases im Wärmetauscher 4 kann jedoch im Vergleich zum Stand der Technik erreicht werden, dass bei gleicher Menge an Inertgas ein größeres Gasvolumen bereitgestellt werden kann, oder - wie in dem Ausführungsbeispiel schematisch angedeutet - bei einer reduzierten eingesetzten Menge an Inertgas ein vergleichbares Volumen an Inertgas bereitgestellt werden kann. Im gezeigten Ausführungsbeispiel wird hier beispielsweise lediglich eine Menge von 210 kg/Stunde eingesetzt und an das Bereitstellungsventil 2 geliefert.

Der Wärmetauscher 4 wird mit an einer anderen Stelle in der Getränkeabfüllanlage anfallender Prozessabwärme gespeist. Entsprechend wird bereits vorhandene Wärmeenergie dazu verwendet, das Inertgas nach dem Druckminderer 3 auf die erhöhte Temperatur anzuheben. Durch die Verwendung von Prozessabwärme kann entsprechend vermieden werden, dass zusätzliche Energie zum Erwärmen des Inertgases verwendet werden muss.

Nach dem Bereitstellungsventil 2 kann das erwärmte Inertgas entsprechend in der Getränkeabfüllanlage verwendet werden, beispielsweise als Blasfluid beim Streckblasen von Behältern, zum Spülen der Behälter vor dem Befüllen der Behälter mit dem eigentlichen Füllprodukt, beispielsweise in einem Rinser oder in dem Füller selbst, zum Vorspannen der Behälter beim Gegendruckabfüllen, zur Inertisierung des Kopfraumes während oder nach dem Befüllen, bevorzugt bis zum Verschließen, zur Überlagerung eines Produktkessels mit dem Inertgas, oder zur Inertisierung des Behältertransportweges, beispielsweise in einem Isolator oder einem Kopfraumisolator. Das Inertgas kann weiterhin dazu verwendet werden, den Schaum im Kopfraum einer befüllten Flasche zu zerstören, Behälterdeckel zu begasen, Behälterverschlüsse auszublasen, oder Behälter nach der Reinigung abzublasen, um sie zu trocknen. Das Inertgas kann auch als Schleusengas oder Sperrgas in einer Schleuse verwendet werden, beispielsweise in einer Verschlussschleuse.
Der Wärmetauscher 4 kann bevorzugt mit Prozessabwärme einer Flaschenwaschmaschine, einer Streckblasmaschine, insbesondere deren Ofen, eines Tunnelpasteurs, eines Behälterwärmers, von Antrieben der Getränkeabfüllanlage, von einem Druckluftkompressor, beispielsweise aus einer Streckblasmaschine, von der Produktbehandlung, beispielsweise einer Kurzzeiterhitzung oder einer Ultrahocherhitzung oder einer Reinigungsanlage, beispielsweise einer CIP-Anlage der Getränkeabfüllanlage, gespeist werden. Weiterhin kann die Prozesswärme auch als Abwärme aus einem Blockheizkraftwerk, welches zum Betrieb der Getränkeabfüllanlage dient, zugeführt werden. Auf diese Weise ist es möglich, die Prozessabwärmemenge, welche sonst verworfen würde, zur Erwärmung des Inertgases im Wärmetauscher 4 zu verwenden.
Die Erwärmung des Inertgases im Wärmetauscher 4 findet bevorzugt auf Temperaturen von 20°C bis 90°C, bevorzugt 30°C bis 60°C, besonders bevorzugt 35°C bis 45°C, und ganz besonders bevorzugt auf 40°C statt. Durch die angegebenen Temperaturen und insbesondere eine Auswahl der Temperaturen kann zum einen erreicht werden, dass eine Beeinträchtigung des Füllprodukts durch die Behandlung mit dem Inertgas ausgeschlossen ist und andererseits sichergestellt werden, dass sich ein mit dem Inertgas behandelter Behälter beim Befüllen oder vor dem Befüllen nicht verändert beziehungsweise verformt.

### Bezugszeichenliste

- 1: Inertgasquelle
- 2: Bereitstellungsventil
- 3: Druckminderer
- 4: Wärmetauscher

## Patentansprüche

1. Verfahren zum Bereitstellen eines Inertgases in einer Getränkeabfüllanlage, umfassend die Schritte:
- Zuführen von Prozessabwärme der Getränkeabfüllanlage zu einem Wärmetauscher (4),
- Zuführen eines Inertgases von einer Inertgasquelle (1) zu dem Wärmetauscher (4),
- Erwärmen des Inertgases im Wärmetauscher (4), und
- Bereitstellen des erwärmten Inertgases zur Verwendung in der Getränkeabfüllanlage, wobei zwischen der Inertgasquelle (1) und dem Wärmetauscher (4) ein Druckminderer (3) angeordnet ist.

2. Verfahren gemäß Anspruch 1, **dadurch gekennzeichnet, dass** das Inertgas im Wärmetauscher auf 20°C bis 90°C, bevorzugt 30°C bis 60°C, besonders bevorzugt 35°C bis 45°C, ganz besonders bevorzugt auf 40°C erwärmt wird.

3. Verfahren gemäß Anspruch 1 oder 2, **dadurch gekennzeichnet, dass** die Prozessabwärme, welche dem Wärmetauscher (4) zugeführt wird, von einer Flaschenwaschmaschine, einer Streckblasmaschine, einem Ofen der Streckblasmaschine, einem Tunnelpasteur, einem Behälterwärmer, einem Antrieb, einem Druckluftkompressor, einer Produktbehandlung, einer Ultrakurzerhitzung, einer Kurzzeiterhitzung, einer CIP-Anlage, oder einem Blockheizkraftwerk abgeleitet wird.

4. Verfahren gemäß einem der vorstehenden Ansprüche, **dadurch gekennzeichnet, dass** das erwärmte Inertgas in der Getränkeabfüllanlage zur Verwendung als Blasfluid beim Streckblasen von Behältern, zum Behälterspülen vor dem Füllen in einem Rinser oder einem Füller, zum Vorspannen der zu befüllenden Behälter, zur Kopfrauminertisierung während beziehungsweise nach dem Füllen bis hin zum Verschließen, zur Produktkesselüberlagerung, zur Inertisierung des Behältertransportweges in einem Isolator oder einem Kopfraumisolator, zur Schaumzerstörung im Kopfraum der befüllten Flasche, zur Unterdeckelbegasung, zur Verschlussausblasung, zur Behälterabblasung, insbesondere zur Trocknung, zur Verschlussausschleusung oder als Sperrgas verwendet wird.

5. Vorrichtung zum Bereitstellen eines Inertgases in einer Getränkeabfüllanlage, umfassend eine Inertgasquelle (1) und ein Bereitstellungsventil (2) zum Bereitstellen des Inertgases zur Verwendung in der Getränkeabfüllanlage, wobei zwischen der Inertgasquelle (1) und dem Bereitstellungsventil (2) ein Wärmetauscher (4) zum Erwärmen des Inertgases vorgesehen ist,
**dadurch gekennzeichnet, dass**
zwischen der Inertgasquelle (1) und dem Wärmetauscher (4) ein Druckminderer (3) angeordnet ist, und dass der Wärmetauscher (4) mit einer Zuführung von Prozessabwärme der Getränkeabfüllanlage verbunden ist.

## Claims

1. Method for providing an inert gas in a beverage filling system, comprising the steps:
- supplying process waste heat of the beverage filling system to a heat exchanger (4),
- supplying an inert gas from an inert gas source (1) to the heat exchanger (4),
- heating the inert gas in the heat exchanger (4) and
- providing the heated inert gas for use in the beverage filling system, wherein a pressure reducer (3) is arranged between the inert gas source (1) and the heat exchanger (4).

2. Method according to claim 1, **characterised in that** the inert gas in the heat exchanger is heated to between 20°C to 90°C, preferably 30°C to 60°C, particularly preferably 35°C to 45°C, quite particularly preferably to 40°C.

3. Method according to claim 1 or 2, **characterised in that** the process waste heat, which is supplied to the heat exchanger (4), is derived from a bottle washing machine, a stretch blow machine, a furnace of the stretch blow machine, a tunnel pasteuriser, a container heater, a drive, an air compressor, a product treatment, ultrashort heating, short-term heating, a CIP unit or a cogeneration unit.

4. Method according to any one of the preceding claims, **characterised in that** the heated inert gas is used in the beverage filling unit for use as a blowing fluid during the stretch blowing of containers, to rinse containers prior to filling in a rinser or a filler, to preload the containers to be filled, to inertise the headspace during or after filling up to closure, for overlay in the product vessel, to inertise the container transport route in an insulator or a headspace insulator, to destroy foam in the headspace of the filled bottle, to gasify the cap bottom, to blow out the closure, to purge the container, in particular to dry, to eject the cap or as a seal gas.

5. Device for providing an inert gas in a beverage filling system, comprising an inert gas source (1) and a supply valve (2) for providing the inert gas for use in the beverage filling system, wherein a heat exchanger (4) is provided between the inert gas source (1) and the supply valve (2) for heating the inert gas,
**characterised in that**
a pressure reducer (3) is arranged between the inert gas source (1) and the heat exchanger (4) and **in that** the heat exchanger (4) is connected to a supply line of process waste heat of the beverage filling system.

## Revendications

1. Procédé de mise à disposition d'un gaz inerte dans une installation de remplissage de boisson, comprenant les étapes de :
- alimentation en chaleur perdue de processus de l'installation de remplissage de boisson d'un échangeur de chaleur (4),
- alimentation en un gaz inerte d'une source de gaz inerte (1) de l'échangeur de chaleur (4),
- chauffage du gaz inerte dans l'échangeur de chaleur (4), et
- mise à disposition du gaz inerte chauffé pour l'utilisation dans l'installation de remplissage de boisson, dans lequel un réducteur de pression (3) est agencé entre la source de gaz inerte (1) et l'échangeur de chaleur (4).

2. Procédé selon la revendication 1, **caractérisé en ce que** le gaz inerte est chauffé dans l'échangeur de chaleur à 20 °C à 90 °C, de préférence 30 °C à 60 °C, de manière davantage préférée 35 °C à 45 °C, de manière particulièrement préférée à 40 °C.

3. Procédé selon la revendication 1 ou 2, **caractérisé en ce que** la chaleur perdue de processus en laquelle est alimenté l'échangeur de chaleur (4) est dérivée d'une machine de lavage de bouteille, d'une machine d'étirage-soufflage, d'un four de la machine d'étirage-soufflage, d'un tunnel de pasteurisation, d'un chauffage de récipient, d'un entraînement, d'un compresseur à air comprimé, d'un traitement de produit, d'un chauffage ultracourt, d'un chauffage instantané, d'une installation CIP ou d'une centrale thermique en montage-bloc avec chauffage à distance.

4. Procédé selon l'une quelconque des revendications précédentes, **caractérisé en ce que** le gaz inerte chauffé est utilisé dans l'installation de remplissage de boisson pour l'utilisation comme fluide de soufflage lors de l'étirage-soufflage de récipients, pour le rinçage de récipients avant le remplissage dans une rinceuse ou une remplisseuse, pour la précontrainte des récipients à remplir, pour l'inertisation d'espace de tête pendant ou après le remplissage jusqu'à la fermeture, pour le chevauchement de chaudière de produit, pour l'inertisation de la course de transport de récipient dans un isolant ou un isolant d'espace de tête, pour la suppression de mousse dans l'espace de tête de la bouteille remplie, pour le gazage de couvercle inférieur, pour le soufflage de fermeture, pour la purge de récipient, en particulier pour le séchage, pour l'évacuation de fermeture ou comme gaz d'arrêt.

5. Dispositif de mise à disposition d'un gaz inerte dans une installation de remplissage de boisson, comprenant une source de gaz inerte (1) et une soupape de mise à disposition (2) pour la mise à disposition du gaz inerte pour l'utilisation dans l'installation de remplissage de boisson, dans lequel un échangeur de chaleur (4) est prévu pour le chauffage du gaz inerte entre la source de gaz inerte (1) et la soupape de mise à disposition (2),
**caractérisé en ce que**
un réducteur de pression (3) est agencé entre la source de gaz inerte (1) et l'échangeur de chaleur (4), et que l'échangeur de chaleur (4) est relié à une alimentation en chaleur perdue de processus de l'installation de remplissage de boisson.
